# FASCICULE DE BREVET EUROPEEN

(11) **EP 0 673 478 B1**
(45) Date de publication et mention de la délivrance du brevet: **26.03.1997**
(21) Numéro de dépôt: 93924790.4
(22) Date de dépôt: 14.10.1993
(51) Int. Cl.: F16F 13/00

(54) **SOUPAPE ET PERFECTIONNEMENT CORRESPONDANT DESTINEE AU CONTROLE DES FLUIDES ELECTRO-RHEOLOGIQUES UTILISES POUR LES SUPPORTS HYDRO-ELASTIQUES ANTIVIBRATION, PRINCIPALEMENT LORSQUE CES DERNIERS DOIVENT SOUTENIR DES MOTEURS D'AUTOMOBILE**
VENTIL ZUR REGELUNG ELEKTRO-RHEOLOGISCHER FLUIDE IN HYDROELASTISCHEN LAGERN
VALVE AND IMPROVEMENT THERETO FOR CONTROLLING ELECTRO-RHEOLOGICAL FLUIDS USED IN HYDRO-ELASTIC VIBRATION-REDUCING MOUNTINGS, ESPECIALLY FOR MOTOR VEHICLE ENGINES

(30) Priorité: 15.10.1992 IT BS920119; 30.07.1993 IT BS930089
(43) Date de publication de la demande: 27.09.1995
(73) Titulaire: C.F. GOMMA S.P:A., I-25050 Passirano (IT)
(72) Inventeur: CANCARINI, Mario, I-25128 Brescia (IT)
(74) Mandataire: Righetti, Giuseppe
(86) Numéro de dépôt international: IT9300109
(87) Numéro de publication internationale: WO9409286

(56) Documents cités:
- EP-A- 0 209 145
- EP-A- 0 259 054
- EP-A- 0 312 719
- EP-A- 0 478 273
- DE-A- 3 631 107
- DE-C- 3 808 521

## Description

### Domaine de la technique

L'invention qui fait l'objet de la présente demande de brevet d'invention industrielle concerne le secteur des soupapes de contrôle et de réglage du mouvement des fluides électro-rhéologiques utilisés pour les supports antivibration hydroélastiques, qui maintiennent en place les groupes motopropulseurs sur le châssis et sur la coque des automobiles.

### Etat de la technique

Actuellement, sont connus et utilisés des supports hydro-élastiques antivibration dotés de deux chambres communicantes de capacité variable, lesquelles contiennent un fluide maintenu en mouvement dans des tubulures fixes ou mobiles, qui agissent de façon à réduire ou à annuler les vibrations produites par les moteurs.

Ces supports hydro-élastiques fonctionnent de la façon suivante: I^ - ils exploitent la mobilité des fluides qu'ils contiennent; II^ - parce que les fluides en question sont maintenus constamment en mouvement par les vibrations du moteur, même lorsque la voiture est à l'arrêt; III^ - parce qu'ils exploitent le fait que les fluides sont obligés de passer continuellement d'une chambre à l'autre, en raison des poussées que les vibrations provoquent dans l'un des sens de déplacement possibles; IV^ - parce que les fluides y circulent d'une chambre à l'autre en passant à travers une soupape en contrôle et en règle les mouvements.

Suivant ces principes, ont été conçus et réalisés différents types de supports hydro-élastiques. Par conséquent, d'autres soupapes, plus ou moins à même d'assurer les effets voulus, sont apparues pour les équiper, les uns et les autres faisant l'objet de recherches et d'expériences costantes.

Du document DE -A- 3631107 est connue une soupape destinée au contrôle des fluides électro-rhèologiques apte à être utilisés pour les supports hydro-élastiques antivibration, correspondant au préambule des revendications 1 et 2.

### Buts et avantages de l'invention

La présente invention a pour but d'améliorer le fonctionnement des supports hydro-élastiques utilisés pour le soutien des propulseurs automobiles, ceci par l'application d'une nouvelle soupape de contrôle des fluides électro-rhéologiques circulant dans lesdits supports.

Selon la présente invention ce but a été atteint par les caractéristiques exposées dans la partie caractérisante des revendications 1 et 2.

Manières particulaires d'exécuter la soupape de l'invention sont exposées dans les revendications dépendantes 3 à 10. La soupape de la présente invention est capable au besoin de modifier et de neutraliser les fonctions desdits supports hydro-élastique; cette soupape en effet est à même d'utiliser les propriétés des liquides électro-rhélogiques, d'en contrôler les passages et les mouvements, mais surtout d'en commander la solidification immédiate et, par conséquent, leur capacité d'agir, ceci au moyen d'une conduite dotée d'électrodes spécialement conçues et réalisées pour obtenir les effets décrits ci-dessus.

Cette nouvelle soupape offre les avantages suivants:
- Elle est en mesure de varier da façon sensible les performances du support, et de les modifier au besoin.
- Elle réalise cette possibilité de façon immédiate parcommande, au moment même ou cela est nécessaire.
- Elle peut être installée sur les supports hydro-élastiques existants.
- Elle né necessite que de petites quantités de fluide électro-rhéologique.
- Au moyen d'électrodes fonctionnant à des tensions différentes elle commande et contrôle la solidification des fluides qui s'y trouvent.
- Elle peut être commandée au moyen d'une installation et de mécanismes à fonctionnement automatique.
- Grâce au perfectionnement qui lui a été apporté, elle est costitué d'éléments très simples à réaliser et à installer dans un élément isolant.

### Dessins

Pour mieux définir l'invention en question, nous en fournirons à présent une description plus détaillée, rédigée sur la base d'une réalisation donnée, prise à titre d'exemple non limitatif, renvoyant aux onze figures suivantes:
FIG. 1: il s'agit de la soupape en question, vue selon la ligne de section AA, indiquée à la FIG.2;
FIG. 2: il s'agit de la soupape vue de B (voir FIG.1);
FIG. 3: dessin en perspective des éléments dont la valve est composée, disposés de façon à indiquer de facon immédiate leur nature et selon quel ordre et quelle séquence ils doivent être montés (même si les plaques sont moins nombreuses par rapport aux figures précédentes) ;
FIG. 4: il s'agit du dessin de la soupape perfectionnée, vue selon la ligne de section LL indiquée à la FIG.5;
FIG. 5: dessin de la soupape perfectionnée vue d'en haut, comme l'indique la flèche M à la FIG.4;
FIG. 6: dessin en perspective des éléments dont la valve perfectionnée est composée, disposés de facon à indiquer da façon immédiate leur nature et selon quel ordre et quelle séquence ils doivent être montés (même si les plaques sont moins nombreuses par rapport aux figures précédentes);
FIG. 7: dessin de la coupe transversale d'un support anti-vibration hydro-élastique pour moteur d'automobile, équipé des soupapes indiquées aux FIGG. 1, 2 et 3, pouvant être remplacé par la soupape représentée aux FIG. 4, 5 et 6, qui assure les mêmes fonctions.

Le figures présentées mettent en évidence les composants de la soupape en question, à même d'activer les champs électriques nécessaires pour obtenir les variations physiques du fluide électro-réologique présent à l'intérieur de la soupape permettant d'assurel les prestations que cette dernière doit fournir au conducteur d'un véhicule dont le moteur est monté sur des supports dotés du système en question.

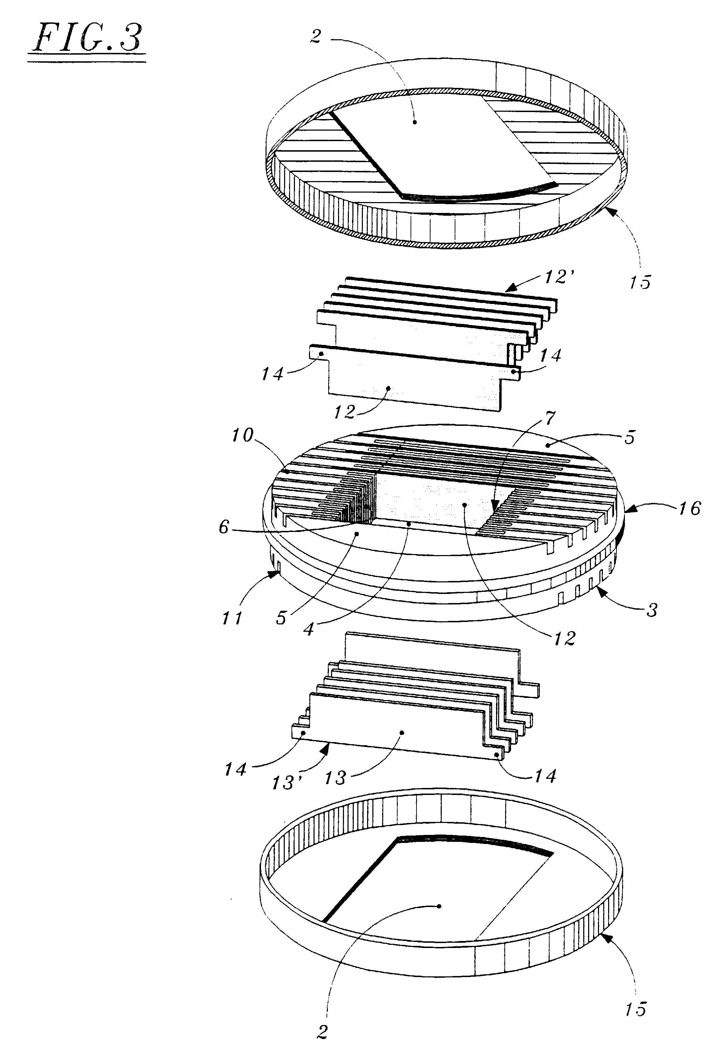

Ledit fluide électro-rhéologique, qui passe de l'état liquide a l'état solide lorsque lui est appliqué le champ électrique nécessaire, se déplace dans la soupape 1, réalisée au moyen de plusieurs plaques métalliques 12 et 13, introduites dans le corps isolant 3, de la façon indiquée à la FIG.3.

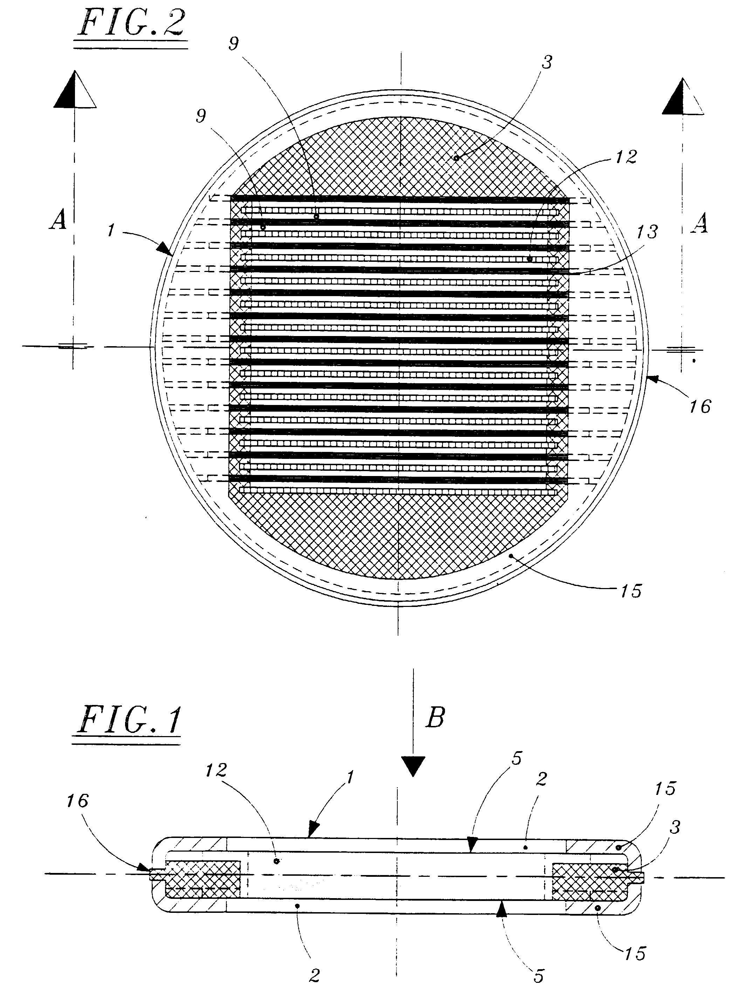

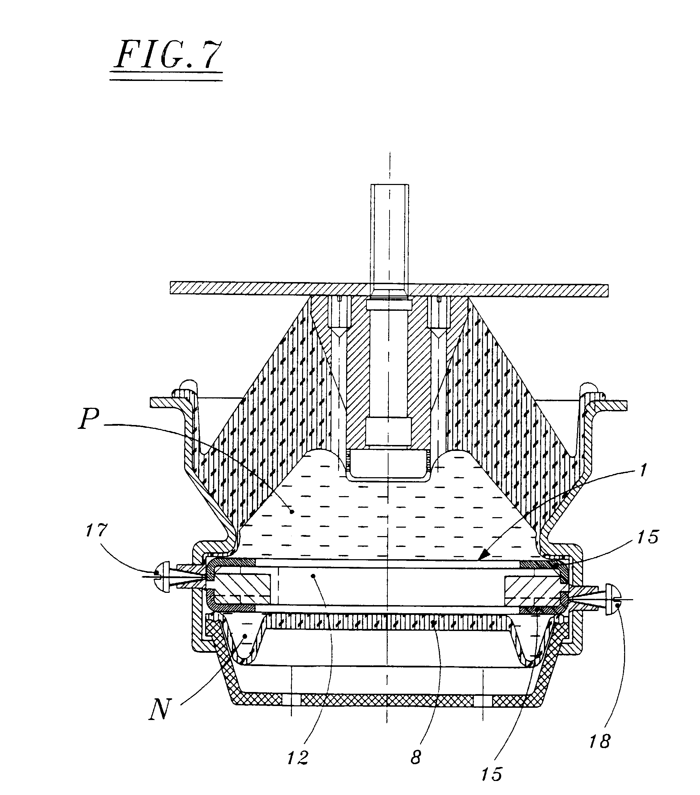

A l'intérieur de la soupape 1, lesdites plaques 12 et 13, parallèles, créent les ouvertures 9, identiques et parallèles également, afin que le fluide, qui doit passer par la soupape pour aller de façon continue de la chambre P a la chambre N et inversement en déformant les membranes élastiques 8 du support, ne recontre pas d'obstacles ni d'autres motif de ralentissement (voir FIG. 7). Sur la soupape 1, tous les ouvertures 9 formés par les plaques 12 et 13 et représentes aux FIG. 1 et 2, sont espacés de façon à permettre la solidification du fluide qui s'y trouve (à l'arrêt ou en mouvement) lorsque les plaques 12 et 13 sont soumises aux courants électriques nécessaires, ceci pour que les plaques elles-mêmes se transforment en pôles négatifs et positifs, créant de la sorte des champs électriques intéressant toute la section de passage du fluide électro-rhéologique.

Les plaques métalliques 12 et 13 à cet effet sont toutes identiques et parfaitement plates, présentent la même épaisseur et sont mises en places sur les rainures 10 et 11 du corps isolant 3, comme le montre la FIG.3. Lors du montage, leurs parties supérieures 12' et 13', qui dépasse des plans 5 de quelques dixièmes de millimètre, est comprimée par les éléments annulaires 15 en tôle embouti (présentant l'ouverture centrale 2), afin d'assurer les contacts voulus avec chacune d'elles, ceci avant que les éléments annulaires 15 puissent atteindre le plan de la saillie annulaire 16. Mises en place et fixées dans leurs logements de la façon indiquée ci- dessus, les plaques 12 et 13 occupent toute l'ouverture rectangulaire 4, réalisant les ouvertures 9 nécessaires pour le passage continu du fluide électro-rhéologique, qui se solidifie entre lesdites ouvertures lorsque est activé le contact électrique servant a réaliser les champs électriques nécessaires.

Le corps 3, en matière plastique isolante, est délimité par deux plans parallèles 5, présentant plusieurs rainures 10 et 11, parallèles, qui se prolongent sur les parois verticales 6 et 7 de l'ouverture 4. Lesdites rainures reçoivent les plaques 12 et 13, qui y sont introduites alternativement: les plaques 12 une par une par le haut; les plaques 13, une par une également, par le bas, alternant avec les premières, de la façon indiquée à la FIG.3. La composition des plaques obtenue de la sorte réalise un ensemble d'éléments qui constituent autant d'ouvertures 9, formées par les parois des plaques 12 d'un côté et par les parois des lames 13 d'un autre côté.

Puisque les plaques 12 sont reliées au moyen des vis 17 (voir FIG.7) à l'élément annulaire 15 supérieur, lequel est à son tour relié au pôle positif du générateur de tension et puisque, d'autre part, les plaques 13 sont reliées à l'élément annulaire 15 inférieur au moyen de la vis 18 (voir FIG.7), lequel est relié à son tour au pôle négatif du même générateur, par conséquent, au moment de passage du courant entre les plaques, il se crée de nombreux champs électriques qui agissent sur le fluide qui y circule en permanence.

Les éléments ci-dessus, accouplés de la façon indiquée, introduits sur le support présenté à la FIG.7, dotés de la quantité appropriée de fluide électro-rhéologique et traversés par le courant voulu au moyen d'impulsions précises ou de commandes électriques appliqués durant la marche du véhicule, permettent au support d'assurer les fonctions qui lui sont attribuées.

Cette première réalisation de la soupape 1 a, dans le but d'en simplifier la réalisation, fait l'objet de modifications appropriées, réduction du nombre des composants, simplification de ces derniers, de façon à réduire les coûts et a permettre un montage plus rapide

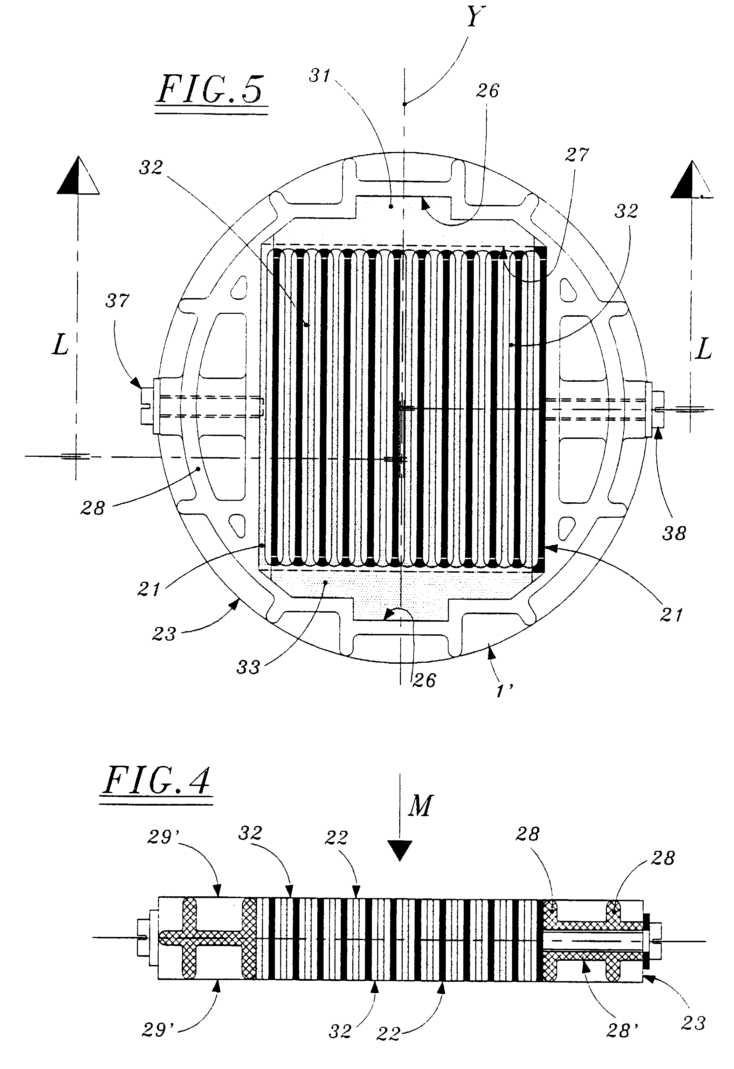

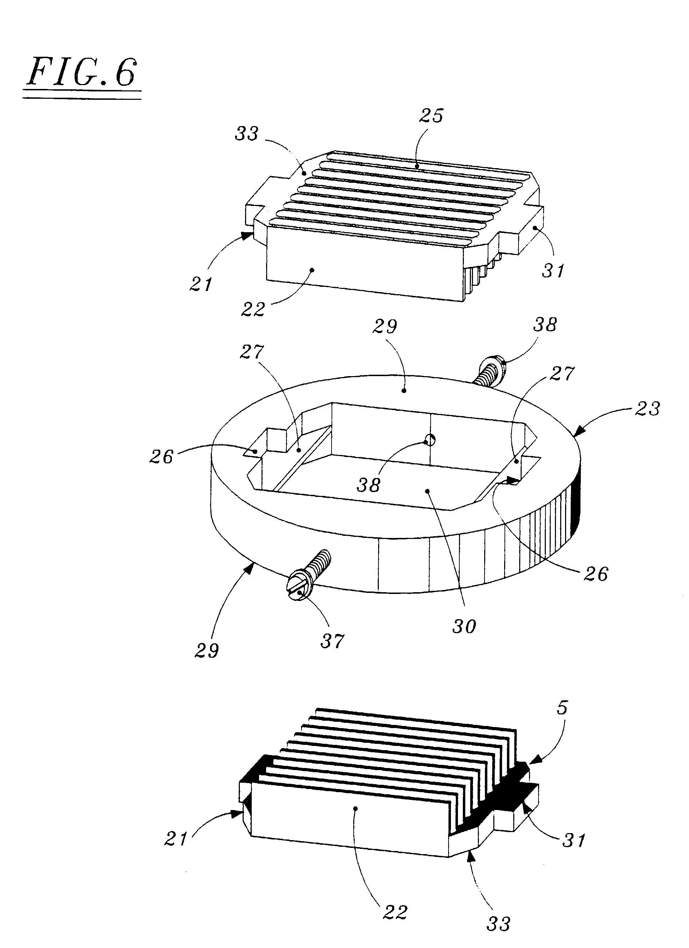

Le perfectionnement par conséquent consiste à avoir réalisé une nuovelle soupape 1', qui diffère des précédentes par la réalisation, mais qui conserve toutes les caractéristiques de fonctionnement décrites ci-dessus. La nouvelle réalisation est formée des éléments suivants: deux électrodes identiques 21 en métal coulé sous pression, un corps 23 en matière plastique isolante présentant une ouverture 30, capable de recevoir et de tenir en place les électrodes 21, accouplées l'une a l'autre de la façon indiqué à la FIG.6. Les deux électrodes 21 ont été conçues de façon à ce que, accouplées, elles puissent créer les ouvertures 32 (voir FIG. 4 et 5), toutes identiques, à travers lesquelles passe le fluide électro-rhéologique lorsqu'il se déplace de la chambre P à la chambre N, comme nous l'avons vu pour la soupape 1 présentée ci-dessus à la FIG.7.

Les électrodes 21 de la soupape perfectionnée 1' sont dotés de nombreux éléments saillants 22 qui sortent de leur base 33, présentant les orifices 25 (voir FIG.6).

Ces éléments saillants 22, lorsqu'ils sont introduits dans l'ouverture de passage centrale 30 du corps 23, se composent en restant parfaitement isolés les uns des autres, comme le montrent les figures 4 et 5, tandis que chacun d'eux est relié a l'un des pôles d'un générateur de tension électrique au moyen des deux vis 37 et 38 qui maintiennent les câbles provenant du génératuer de la façon décrite pour le cas précédent.

Dans le cas présent également, lorsque les électrodes 21 son soumis au courant électrique, cela entraîne la formation de nombreux champs électriques qui modifient instantanément la condition physique du fluide qui se trouve dans les ouvertures 32 de la soupape 1'. En l'absence de forces extérieures agissant sur le support, cette transformation du fluide, pedant toute la durée de l'application du courant sur le support, a pour effet de le maintenir à l'état solide et, par conséquent, de le maintenir à l'arrêt et de le rendre solidaire des éléments saillants 22 et des électrodes 21. Ceci détermine et maintient la fermeture de toutes les ouvertures 32 et l'immobilité du fluide contenu dans les chambres P et N. Il reste fixe dans la position dans laquelle il se trouvait au moment où a eu lieu le blocage et ceci tant que durent les contacts électriques qui l'activent. Le corps 23, qui a la forme d'un cylindre aplati (voir FIG.6) est lui aussi délimité par deux plans parallèles 29 qui, pour des exigences de pressage, peut être réalisé de la façon indiquée aux FIG.4 et 5, autrement dit doté de dispositif d'allogement, limités par les parois 28 qui sont reliées à la paroi de séparation 28', tandis que les extrémités opposées des saillies 28 se trouvent sur duex plans 29', parallèles. Le corps 23, lui-aussi doté d'une ouverture de passage centrale 30, presque rectangulaire et présentant (voir FIG.6) des rainures qui, avec les plans saillants 27, créent quatre niches 26, alignées entre elles et avec leurs axes, situes sur l'axe Y (voir FIG.5).

Au moment du montage de la soupape 1', les quatres niches 26 reçoivent les quatre saillies latérales 31 des électrodes 21 et, puisque les deux saillies latérales 31 de chaque électrode 21 ne se trouvent pas sur la ligne médiane de l'élément, il s'ensuit que, durant le montage, les éléments saillants 22 des deux électrodes 21 se mettent automatiquement dans la position voulue, de façon a ce que, dans les orifices 25 des électrodes 21, se mettent en place les éléments 22, créant de la sorte les fentes 32, toutes identiques (voir FIG.4 et 5).

La composition résultant de l'accouplement des duex électrodes 21 réalise les champs électriques, comme cela a été dit dans la description de la première soupape, à travers les liaisons par câble avec les pôles du générateur au moyen des vis 37 e 38, avec les pôles du génératuer.

## Revendications

1. Une soupape destinée au contrôle des fluides électrorhéologiques apte à être utilisée pour les supports hydro-élastiques antivibration principalement lorsque ces derniers doivent soutenir des moteurs d'automobile et capable de contrôler le fluide électro-rhéologique qui circule à l'intérieur des deux chambres communicantes de chacun des supports qui unissent le moteur au châssis ou à la coque de l'automobile, ladite soupape comprenant:
- un corps isolant (3) délimité par deux plans supérieur et inférieur parallèles (5) et doté d'une ouverture (4);
- des plaques métalliques (12, 13) forment des electrodes introduites dans l'ouverture (4) du corps isolant (3) et mises en place toutes équidistantes et parallèles entres elles et parfaitement isolées entre elles;
- ouvertures (9) identiques et parallèles entre elles, formées par les parois des plaques (12, 13) et à travers lesquelles le fluide électro-rhéologique passe pour aller d'une chambre (P) à une autre chambre (N), et
- éléments métalliques pour transmettre la tension électrique aux plaques métalliques (12, 13) de façon a permettre la solidification du fluide électro-rhéologique lorsque les plaques (12, 13) sont soumises aux courants électriques;
caractérisée en ce que:
(a) le corps isolant (3) est muni de rainures (10) sur le plan supérieur (5) et qui se prolongent sur les parois verticales (6, 7) de l'ouverture (4), et de rainures (11) sur le plan inférieur (5) et qui se prolongent sur les parois verticales (6, 7) de l'ouverture (4);
(b) les plaques métalliques (12, 13) sont identiques et introduites alternativement dans les rainures (10, 11): les plaques (12) par le plan supérieur et les plaques (13) par le plan inférieur (5) s'alternant avec les premieres; lesdites plaques métalliques (12, 13) étant munies d'ailettes en saillie (14); les parties supérieures (12', 13') desdites ailettes en saillie (14) depassant les plans supérieur et inférieur, respectivement; et
(c) les éléments métalliques pour transmettre la tension électrique aux plaques métalliques (12, 13) comprenant deux éléments annulaires métalliques (15) chacun avec une paroi d'extrémité présentant une ouverture (2) qui essentiellement correspond à l'ouverture (4) du corps isolant (3), l'un des ces éléments annulaires (15), l'élément annulaire supérieur, enveloppant le corps isolant (3) du haut afin d'assurer les contacts voulus entre les parties supérieures (12') des ailettes en saillie (14) d'une des sortes de plaque (12) et la surface intérieure de ladite paroi d'extrémité de l'élément annulaire (15) supérieur, l'autre de ces éléments annulaires (15), l'élément annulaire (15) inférieur, enveloppant le corps isolant (3) du bas afin d'assurer les contacts voulus entre les parties supérieures (13') des ailettes en saillie (14) de l'autre sorte de plaques (13) et la surface intérieure de ladite paroi d'extrémité de l'élément annulaire (15) inférieur; au moyen des vis (17, 18) la tension électrique est transmise à l'une et à l'autre des deux éléments annulaires métalliques (15).

2. Une soupape destinée au contrôle des fluides électro-rhéologiques apte à être utilisée pour les supports hydro-élastiques antivibration principalement lorsque ces dermiers doivent soutenir des moteurs d'automobile et capable de contrôler le fluide électro-rhéologique qui circule à l'intérieur des deux chambres communicantes de chacun des supports qui unissent le moteur au châssis ou à la coque de l'automobile, ladite soupape comprenant:
- un corps en matériau isolant (23), délimité par deux plans supérieur et inférieur parallèless (29) et doté d'une ouverture (30);
- deux électrodes (21) identiques introduites dans l'ouverture centrale (30) du corps isolant (23) chacune des deux electrodes (21) comprenant une base (33);
- des plaques métalliques situées à une certaine distance l'une de l'autre et formant des éléments saillants (22) de chacune des deux électrodes;
- ouvertures (32) formée par les parois des éléments saillants (22) et à travers lesquelles le fluide electro-rheologique passe pour aller d'ue chambre (P) à une autre chambre (N), et
- éléments métalliques pour transmettre la tension électrique aux électrodes (21) de façon à permettre la solidification du fluide électro-rhéologique lorsque les plaques ou électrodes (21) sont soumises aux courants électriques:
caracterisée en ce que les ouvertures (32) sont identiques et parallèles entre elles; chacune des deux électrodes (21) comprenant les éléments saillants (22) qui se détachent perpendiculairement de la base (33) et deux saillies latérales (31), chacune des deux bases (33) ayant des ouvertures (25) correspondantes aux ouvertures (32) conformes à ladite distance des éléments en saillants (22); le corps en matériau isolant (23) ayant deux niches (26) supérieures et deux niches (26) inférieures, dans les niches supérieures lesdites saillies laterales (31) de l'une des deux bases (33) étant situées et dans les niches inférieures lesdites saillies latérales (31) de l'autre des deux bases (33) étant situées de manière que les deux électrodes sont situées dans l'intérieur de l'ouverture centrale (30) du corps (23) en matériau isolant et que les éléments saillants (22) des deux électrodes (21) se recouvrent; deux vis (37, 38) traversant le corps (23) en materiau isolant (23) et étant capables de transmettre une tension électrique aux électrodes (21).

3. La soupape selon la revendication 2, caracterisée en que les deux électrodes (21) sont en métal coulé sous pression.

4. La soupape selon la revendication 2 ou 3, caracterisée en ce que les ouvertures (25) des bases (33) des électrodes (21) sont trois fois plus larges que les éléments saillants (22).

5. La soupape selon n'importe quelle des revendications de 2 à 4, caracterisée en ce que les ouvertures (32) se réalisent lorsque les deux électrodes (21) se composent dans les logements du corps (23).

6. La soupape selon n'importe quelle des revendications precedenfes de 2 à 5, caractérisée en ce que les deux saillies laterales (31) des deux électrodes (21) sont identiques, symétriques et situées sur l'axe correspondant à la ligne médiane Y de l'ouverture (30) du corps (23).

7. La soupape selon n'importe quelle des revendications précédentes de 2 à 6, caractérisée en ce que les deux saillies latérales (31) sont desaxees par rapport à l'axe de l'électrode (21) de façon à ce que, en accouplant les deux electrodes (21) dans l'ouverture (30) du corps (23), elles soient en mesure de réaliser les ouvertures (32), ayant toutes la même largeur.

8. La soupape selon n'importe quelle des revendications precedentes de 2 à 7, caractérisée en ce que le corps (23) en matière plastique isolante comprend une ouverture (30) ayant quatre niches (26) identiques et alignées les unes sur les autres et ayant leur axe sur l'axe Y de l'ouverture (30).

9. La soupape selon la revendication 8, caractérisée en ce que les quatre niches (26) sont séparées deux par deux des plans saillants (27), qui réalisent la composition et l'isolement des électrodes (21) lorsque ces dernières sont introduites dans le corps (23).

10. La soupape selon n'importe quelle des revendications précédentes de 2 à 9, caractérisée en ce que le corps (23) est doté d'un dispositif d'allogement limité par des parois (28) du corps (23) qui sont reliée à une paroi de séparation (28') et les extremites opposees des parois (28) se trouvent sur deux plans (29') parallèles

## Patentansprüche

1. Ventil zur Regelung elektro-reologischer Fluide in hydroelastischen, schwingungsdämpfenden Lagern, vor allem zur Abstützung von Kraftfahrzeugmotore und zur Regelung des elektro-reologischen Fluids, das innerhalb von zwei Kammern umläuft, die mit jedem der Lagern verbunden sind, die den Motor am Fahrgestell oder am Wagenkasten halten, wobei das Ventil umfaßt:
- einen Isolierkörper (3), der durch zwei parallele Ebenen (5), eine obere und eine untere, begrenzt ist und eine Aussparung (4) aufweist;
- Elektroden bildende Metallblätter (12, 13), die in die Aussparung (4) des Isolierkörpers (3) eingebracht sind und alle mit gleichem Abstand und zueinander parallel und vollkommen zueinander isoliert angeordnet sind;
- zueinander identische und parallele Öffnungen, die durch die Wände der Metallblätter (12, 13) gebildet sind und durch die das elektro-reologische Fluid fließt, um von einer Kammer (P) in die andere Kammer (N) überzugehen, und
- Metallelemente um elektrische Spannung an den Metallblättern (12, 13) derart anzulegen, daß die Erstarrung des elektro-reologischen Fluids ermöglicht wird, sobald die Metallblätter (12, 13) elektrischen Strömen ausgesetzt sind;
dadurch gekennzeichnet, daß:
(a) der Isolierkörper (3) mit Nuten (10), die an der oberen Ebene (5) vorgesehen sind und an den senkrechten Wänden (6, 7) der Aussparung (4) fortlaufen, und mit Nuten (11) versehen ist, die an der unteren Ebene (5) vorgesehen sind und an den senkrechten Wänden (6, 7) der Aussparung (4) fortlaufen;
(b) die Metallblätter (12, 13) identisch und wechselweise in den Nuten (10, 11) eingebracht sind, die Metallblätter (12) durch die obere Ebene (5) und die Metallblätter (13) durch die untere Ebene (5), wobei diese letzteren sich mit den ersteren abwechseln; wobei die Metallblätter (12,13) mit vorspringenden Rippen (14) versehen sind; wobei die oberen Abschnitte (12', 13') der vorspringenden Rippen (14) jeweils über die obere und die untere Ebene hinausgehen; und
(c) die Metallelemente zur Anlegung von elektrischen Spannungen an den Metallblättern (12, 13) zwei metallische Ringelemente (15) umfassen, die jeweils eine endseitige Wand besitzen, die eine Aussparung (2) aufweist, die im wesentlichen der Aussparung (4) des Isolierkörpers (3) entspricht, wobei eines dieser Ringelemente (15) und zwar das obere Ringelement den Isolierkörper (3) von oben umgibt, um die gewünschten Kontakte zwischen den oberen Abschnitten (12') der vorspringenden Rippen (14) einer Blattart (12) und der Innenfläche dieser endseitigen Wand des oberen Ringelementes (15) sicherzustellen, wobei das andere Ringelement (15), und zwar das untere Ringelement, den Isolierkörper (3) von unten umgibt, um die gewünschten Kontakte zwischen den oberen Abschnitten (13') der vorspringenden Rippen (14) der anderen Blattart (13) und der Innenfläche der endseitigen Wand des unteren Ringelementes (15) sicherzustellen; wobei die elektrische Spannung von einem auf das andere der beiden metallischen Ringelemente (15) über Schrauben (17, 18) übertragen wird.

2. Ventil zur Regelung elektro-reologischer Fluide in hyderoelastischen, schwingungsdämpfenden Lagern, insbesondere zur Abstützung von Kraftfahrzeugmotoren und zur Regelung des elektro-reologischen Fluids, das innerhalb der beiden Kammern umläuft, die jeweils mit den Lagern verbunden sind, die den Motor am Fahrgestell oder am Wagenkasten halten, wobei dieses Ventil umfaßt:
- einen Körper aus Isoliermaterial (23), der durch zwei, eine obere und eine untere, zueinander parallele Ebenen (29) begrenzt und mit einer Aussparung (30) versehen ist;
- zwei identische, in der mittigen Aussparung (30) des Isolierkörpers (23) eingebrachte Elektroden (21), von denen jede der beiden Elektroden (21) eine Basis (23) umfaßt;
- Metallblätter, die mit einem bestimmten Abstand voneinander angeordnet sind und von jedem der beiden Elektroden vorspringende Elemente (22) bilden;
- Öffnungen (32), die durch die Wände der vorspringenden Elemente (22) gebildet sind und durch die das elektro-reologische Fluid fließt, um von einer Kammer (P) in die andere Kammer (N) überzugehen, und
- Metallelemente zur Anlegung von elektrischer Spannung an den Elektroden (21) derart, daß die Erstarrung des elektro-reologischen Fluids ermöglicht wird, sobald die Blätter oder Elektroden (21) den elektrischen Strömen ausgesetzt sind;
dadurch gekennzeichnet, daß die Öffnungen (32) identisch und zueinander parallel sind;
wobei jede der beiden Elektroden (21) die vorspringenden Elemente (22), die sich senkrecht von der Basis (23) erheben, und zwei seitliche Vorsprünge (31) umfaßt, wobei jede der beiden Basen (23) Öffnungen (25) aufweist, die den Öffnungen (32) entsprechen, die gemäß dem genannten Abstand der vorspringenden Elemente (22) vorgesehen sind; wobei der Körper aus Isoliermaterial (23) zwei obere Nischen (26) und zwei unter Nischen (26) besitzt, wobei in den oberen Nischen die seitlichen Vorsprünge (31) einer der beiden Basen (33) angeordnet sind, und in den unteren Nischen, die seitlichen Vorsprünge der anderen Basis (33) derart angeordnet sind, daß die beiden Elektroden innerhalb der mittigen Aussparung (30) des Körpers (23) aus Isoliermaterial liegen und die vorspringenden Elemente (22) beider Elektroden (21) übereinander liegen; wobei die beiden Schrauben (37, 38) den Körper (23) aus Isoliermaterial durchgreifen und die elektrische Spannung den Elektroden (21) übertragen.

3. Ventil nach Anspruch 2, dadurch gekennzeichnet, daß die beiden Elektroden (21) aus Druckgußmetall bestehen.

4. Ventil nach Anspruch 2 oder 3, dadurch gekennzeichnet, daß die Öffnungen (25) der Basen (33) der Elektroden (21) dreimal breiter sind als die vorspringenden Elemente (22).

5. Ventil nach einem der Ansprüche von 2 bis 4, dadurch gekennzeichnet, daß die Öffnungen (32) hergestellt werden, wenn zwei Elektroden (21) in den Aufnahmen des Körpers (23) zusammengesetzt werden.

6. Ventil nach einem der vorstehenden Ansprüche von 2 bis 5, dadurch gekennzeichnet, daß die beiden seitlichen Vorsprünge (31) der beiden Elektroden (21) identisch, symmetrisch und auf der Achse angeordnet sind, die der Mittellinie Y der Aussparung (30) des Körpers (23) entspricht.

7. Ventil nach einem der vorstehenden Ansprüche von 2 bis 6, dadurch gekennzeichnet, daß die beiden seitlichen Vorsprünge (31) gegenüber der Achse der Elektrode (21) derart versetzt sind, daß bei Paarung der beiden Elektroden (21) in der Aussparung (30) des Körpers (23) imstande sind, die Öffnungen (32) alle mit derselben Breite herzustellen.

8. Ventil nach einem der vorstehenden Ansprüche von 2 bis 7, dadurch gekennzeichnet, daß der Körper (23) aus isolierendem Kunststoff eine Aussparung (30) mit vier identischen und zueinander ausgerichteten Nischen (26) umfaßt, die ihre Achse auf der Achse Y der Aussparung (30) haben.

9. Ventil nach Anspruch 8, dadurch gekennzeichnet, daß die vier Nischen (26) paarweise von den vorstehenden Ebenen (27) getrennt sind, die die Zusammensetzung und die Isolierung der Elektroden (21) ausführen, sobald diese letzteren im Körper (23) eingebracht sind.

10. Ventil nach einem der vorstehenden Ansprüche von 2 bis 9, dadurch gekennzeichnet, daß der Körper (23) mit einer Erleichterungseinrichtung versehen ist, der durch Wände (28) des Körpers (23) begrenzt ist, die mit einer Trennwand (28') verbunden sind, wobei die abgewandten Enden der Wände (28) sich auf zwei zueinander parallelen Ebenen (29') befinden.

## Claims

1. A valve for controlling electro-rheological fluids used in hydro-elastic vibration-reducing mountings, especially when the latter are intended for motor-vehicle engines, and capable of controlling the electro-rheological fluid circulating within the two communicating chambers of each of the mountings connecting the engine to the motor-vehicle chassis or body, said valve comprising:
- an insulating body (3) defined by two, upper and lower, planes (6) parallel to each other and provided with an opening (4);
- electrode-forming metal plates (12, 13) introduced into the opening (4) of the insulating body (3) and positioned at equidistant and parallel locations which are perfectly insulated from each other;
- identical openings (9) parallel to each other, formed by the plate (12, 13) walls and through which passage of the electro-rheological fluid occurs on its movement from one chamber (P) to the other (N), and
- metal elements for transmission of electric voltage to the metal plates (12, 13), so as to enable the electro-rheological fluid solidification when the plates (12, 13) are submitted to electric currents;
characterized in that:
(a) the insulating body (3) is provided with grooves (10) formed in the upper plane (5) and extending to the vertical walls (6, 7) of the opening (4), and with grooves (11) formed in the lower plane (6) and extending to the vertical walls (6, 7) of the opening (4);
(b) the metal plates (12, 13) are identical with each other and alternately introduced into the grooves (10, 11): plates (12) through the upper plane and plates (13) through the lower plane (5) and in alternated relationship with the first plates; said metal plates (12, 13) being provided with projecting tabs (14); the upper portion (12', 13') of said projecting tabs (14) going beyond the upper and lower planes, respectively; and
(c) the metal elements for transmitting electric voltage to the metal plates (12, 13) comprising two metal annular elements (15) each of them having an end wall formed with an opening (2) essentially corresponding to the opening (4) in the insulating body (3), one of said annular elements, the upper one, surrounding the insulating body (3) from top in order to ensure the desired contacts between the upper portions (12') of the projecting tabs (14) of one type of plates (12) and the inner surface of said end wall of the annular upper element (15), the other annular element (15), the lower one, surrounding the insulating body (3) from bottom in order to ensure the desired contacts between the upper portions (13') of the projecting tabs (14) of the other type of plates (13) and the inner surface of said end wall of the annular lower element (15); electric voltage being transmitted to either one of the two annular metal elements (15) by means of screws (17, 18).

2. A valve for controlling electro-rheological fluids used in hydro-elastic vibration-reducing mountings, especially when the latter are intended for motor-vehicle engines, and capable of controlling the electro-rheological fluid circulating within the two communicating chambers of each of the mountings connecting the engine to the motor-vehicle chassis or body, said valve comprising:
- a body of insulating material (23) defined by two, upper and lower, planes (29) parallel to each other and provided with an opening (30);
- two identical electrodes (21) introduced into the central opening (30) of the insulating body (23); each of the two electrodes (21) comprising one base (33);
- metal plates placed a certain distance from each other and forming projecting elements (22) from each of the two electrodes;
- openings (32) formed by the walls of the projecting elements (22) and through which the electro-rheological fluid passes when moving from one chamber (P) to the other (N), and
- metal elements for transmitting electric voltage to the electrodes (21) in order to enable solidification of the electro-rheological fluid when the plates or electrodes (21) are submitted to electric currents; characterized in that openings (32) are identical and parallel to each other;
each of the two electrodes (21) comprising the projecting elements (22) extending at right angles from the base (33) and two side projections (31); each of the two bases (33) being formed with openings (25) corresponding to the openings (32) provided at said distance by the projecting elements (22); the body made of insulating material (23) having two upper recesses (26) and two lower recesses (26), said side projections (31) of one of the two bases (33) being located in the upper recesses and said side projections (31) of the other of the two bases (33) being located in the lower recesses, in such a manner that the two electrodes are set at the inside of the central opening (30) of the body (23) of insulating material and that the projecting elements (22) of the two electrodes (21) are disposed upon each other; two screws (37, 38) passing through the body (23) of insulating material and being capable of transmitting an electric voltage to the electrodes (21).

3. A valve according to claim 2, characterized in that the two electrodes (21) are made of the die-cast metal material.

4. A valve according to claim 2 or 3, characterized in that the opening (25) of the electrode bases (33) are three times larger than the projecting elements (22).

5. A valve according to anyone of claims 2 to 4, characterized in that openings (32) are formed when the two electrodes (21) are put together in the body (23) housings.

6. A valve according to anyone of the preceding claims 2 to 5 , characterized in that the two side projections (31) of the two electrodes (21) are identical and symmetrical and located on the axis corresponding to the centre line Y of the body opening (30).

7. A valve according to anyone of the preceding claims 2 to 6, characterized in that the two side projections (31) are offset with respect to the electrode (21) axis so that, by coupling the two electrodes (21) in the body opening (30), they will be able to form openings (32) which all have the same width.

8. A valve according to anyone of the preceding claims 2 to 7, characterized in that the body (23) of insulating plastic material is formed with an opening (30) having four identical recesses (26) aligned with each other and having their axes on axis Y of the opening (30).

9. A valve according to claim 8, characterized in that the four recesses (26) are separated two by two from the projecting planes (27) carrying out the composition and insulation of the electrodes (21) when the latter are introduced into the body (23).

10. A valve according to anyone of the preceding claims 2 to 9, characterized in that the body (23) is equipped with a lightening device defined by walls (28) of the body (23) which are connected to a partition (28') and the opposite ends of walls (28) are disposed in tow parallel planes (29').
